(19) **Europäisches Patentamt / European Patent Office / Office européen des brevets**

(11) **EP 1 405 255 B1**

(12) **EUROPEAN PATENT SPECIFICATION**

(45) Date of publication and mention
of the grant of the patent:
**17.06.2009 Bulletin 2009/25**

(51) Int Cl.:
***G06K 7/10*** (2006.01)

(21) Application number: **02744037.9**

(22) Date of filing: **25.06.2002**

(86) International application number:
**PCT/SE2002/001246**

(87) International publication number:
**WO 2003/001441 (03.01.2003 Gazette 2003/01)**

(54) **METHOD AND DEVICE FOR DATA DECODING**

VERFAHREN UND EINRICHTUNG ZUR DATENDECODIERUNG

PROCEDE ET DISPOSITIF DE DECODAGE DE DONNEES

(84) Designated Contracting States:
**AT BE CH CY DE DK ES FI FR GB GR IE IT LI LU MC NL PT SE TR**

(30) Priority: **26.06.2001 SE 0102255**

(43) Date of publication of application:
**07.04.2004 Bulletin 2004/15**

(73) Proprietor: **Anoto AB**
**223 69 Lund (SE)**

(72) Inventors:
• **OLSSON, Andreas**
**S-222 29 Lund (SE)**
• **PETTERSSON, Mats, Petter**
**S-226 44 Lund (SE)**

(74) Representative: **Perklev, Karin Cecilia et al**
**Anoto AB**
**Emdalavägen 18**
**223 69 Lund (SE)**

(56) References cited:
**WO-A1-00/73983      WO-A1-01/26032**
**WO-A1-01/30589      US-A- 5 221 833**
**US-A- 5 852 434**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention relates to a method for data decoding, comprising decoding data stored in a partial area of a coding pattern on a surface, based on a recorded image of the partial area, said coding pattern containing elements which each have at least two possible decoding values. The invention also relates to a device for data decoding, comprising processing means for decoding of data which is stored in a partial area of a coding pattern on a surface. Moreover the invention relates to a memory medium on which is stored a computer program with instructions for data decoding based on an image. Finally, the invention also concerns use of probability calculations in data decoding based on an image of a coding pattern.

Background Art

In many situations it is desirable to be able to decode data stored in coded form on a product. One example of such data decoding is to determine the position on a surface provided with a coding pattern. Such position determination is useful, for instance, when using a reading pen on a writing surface.

WO 01/26032 describes a device for position determination and a product that has a surface that is provided with a coding pattern. The device is arranged to record an image of the surface, to locate a predetermined number of symbols in the image, to determine the value of each of the symbols and to determine its position on the surface based on these values.

WO00/73983 discloses another position-coding pattern, in which each position is coded by a plurality of symbols which each has at least two possible decoding values.

There are many other types of coding patterns in the form of position codes, for example, those in which each position is coded by a complex symbol with a special appearance.

A problem in decoding the known types of coding patterns is that the values of the symbols cannot always be determined with full accuracy. When the coding pattern is printed on a surface, the limited resolution of printers may imply that the symbols are not printed completely exactly. The symbols can, for example, be printed somewhat deformed or somewhat displaced from their "nominal" location. If it is the shape or location of the symbol that determines its value, the deformation and the displacement, respectively, mean that it may be difficult to determine the value of the symbol unambiguously.

It sometimes also happens that a symbol is not printed at all.

Another problem may arise if the coding pattern is printed on a surface that has a structure of its own that can interfere with the location of symbols in the recorded image. Structures in the surface can then be perceived as symbols by a device for data decoding. It can also happen that there are impurities, for instance in the form of dust, on the surface on which the coding pattern is printed. These impurities may give rise to noise symbols in the recorded image, which noise symbols may then by mistake be identified as symbols in the coding pattern. Also sensor noise from a sensor for recording the image may cause noise symbols in the image. Noise symbols in the recorded image may also originate from a defect on one of the components in the device, for instance damaged pixels in the sensor. On account of the above reasons there is therefore a risk that data cannot be decoded from the coding pattern in a recorded image.

US 5,221,833 discloses methods and means for reducing bit errors rates in a self-clocking glyph code, according to which the glyphs are sorted into a cyclical sequence in accordance with their probability of being confused with each other, and the ordered glyphs then are assigned their respective encode values in accordance with a Gray code sequence.

Summary of the Invention

An object of the present invention is to wholly or partly overcome the above-mentioned problems relating to prior art.

According to the invention this object is achieved by means of a method, a device, and a memory medium, which have the features that are stated in the independent claims. Preferred embodiments are stated in the dependent claims.

A basic concept of the present invention is to use probability calculations in decoding of data which is stored in a coding pattern on a surface.

For the reasons discussed above, the coding pattern on a surface, and/or the imaging of the same, is usually not completely perfect. One single decoding value for an element can usually not be determined with complete certainty as there is a possibility that the element has another of the possible decoding values. According to the invention, for each one of the at least two possible decoding values for each element, an associated decoding value probability (called value probability in the following) is therefore calculated, which indicates the probability that the element has that decoding value. If an element is determined unambiguously, then the value probability that corresponds to the unambiguously determined decoding value of the element will be maximum, while the other value probabilities for the element are zero. The more uncertain the decoding value of an element, the less difference there is between its value probabilities. If an element is missing in one place in the coding pattern, the value probabilities for the element will therefore be equally high. The present invention thus enables a relatively robust decoding of the coding pattern.

In the recorded image, more than a predetermined number of elements that are required for decoding of data may often be identified. The predetermined number of elements which may contribute most information in decoding can therefore be selected. As stated above, these elements are those having a dominating value probability for one of the decoding values. Consequently the chance increases that data can be decoded based on the recorded image since an element contributing little information can be sorted out.

The method may further comprise decoding at least a first set of decoding values for the predetermined number of identified elements.

The method may further comprise calculating sequence probabilities for a sequence of elements in the recorded partial area in the image. For instance, if the predetermined number of identified elements is a matrix, the sequence of elements can be the elements in a column or row in the matrix. The sequence probabilities can be calculated based on the value probabilities for the decoding values in the first set that correspond to the elements in the sequence. A value probability can be calculated for each of a plurality of permissible combinations of decoding values. For each element, each of the possible decoding values corresponds to a value probability. The sequence probability for a combination may be determined based on the value probabilities for the decoding values which constitute the combination. In the same way as a value probability for an element corresponds to the element having the corresponding element value, a sequence probability for a sequence of elements corresponds to the sequence consisting of the corresponding combination. Of course, there are other ways than that described above in which sequence probabilities can be calculated.

The method may comprise selecting one of the possible decoding values for each of the elements which correspond to the first set of decoding values. The selection can be made based on a condition, given by the coding pattern, for the mutual decoding values of the elements. The condition conveniently indicates which combinations of decoding values may exist among the elements in the coding pattern in the recorded image. In other words, the condition is given by how the used coding pattern is made up. The condition for existing combinations can be given at a global level, i.e. seen over all elements in the image, or at a local level, i.e. over an ensemble of elements in the image, for instance by columns and/or rows. Probability calculations are used to combine the information in the image, corresponding to said condition, so that the decoding values of the elements can be selected based on the probability calculations, within the scope of the condition.

The condition may indicate the above-discussed permissible combinations of decoding values.

Coding patterns that are used in connection with the present invention can usually be recorded "from more than one direction". This means that the coding pattern in the recorded image can be rotated in different ways. The result of a decoding of data depends upon the rotation of the coding pattern. For this reason, the method according to the invention may comprise carrying out the decoding based on rotation probabilities. The rotation probabilities correspond to different rotations or orientations of the recorded image, i.e. different rotations of the coding pattern. For each of the different rotations of the image, a rotation probability can be calculated. This can be done based on the sequence probabilities or value probabilities of the decoding values for the identified elements. Then data may be decoded based on the rotation of the coding pattern which gives the highest rotation probability. This step implies that the decoding of data is not affected by a device according to the invention being rotated in relation to the surface during the position determination.

The image can be recorded by a sensor. The sensor can be integrated with the device for data decoding or be positioned in a separate unit, from which the device receives the recorded image.

The method can be implemented as a computer program which is stored in the memory of the device and executed in the processor or in an external device. Alternatively, the method can be implemented completely or partially in the form of an application-specific circuit, such as an ASIC, or in the form of digital or analogue circuits or of some suitable combination thereof.

Brief Description of the Drawings

The present invention will now be described in more detail by way of embodiments and with reference to the accompanying drawings, in which

Fig. 1 shows a device for data decoding.
Fig. 2 shows a flow chart describing a decoding example.
Fig. 3a shows a sheet of paper provided with a first type of coding pattern.
Fig. 3b shows an enlargement of part of the coding pattern in Fig. 3a.

Fig. 4 shows four ideal locations of a mark in a coding pattern.
Fig. 5 shows how value probabilities for a mark are calculated.
Fig. 6 shows how value probabilities for an element are calculated.
Fig. 7 illustrates the creation of a first and a second matrix.
Fig. 8 shows a cyclic main number sequence.
Fig. 9 illustrates the calculation of a sequence probability.
Fig. 10 illustrates steps in the decoding of data.
Fig. 11 illustrates rotation of a coding pattern.
Fig. 12 shows a second type of coding pattern.
Fig. 13 shows two more examples of coding patterns.

Detailed Description of the Invention

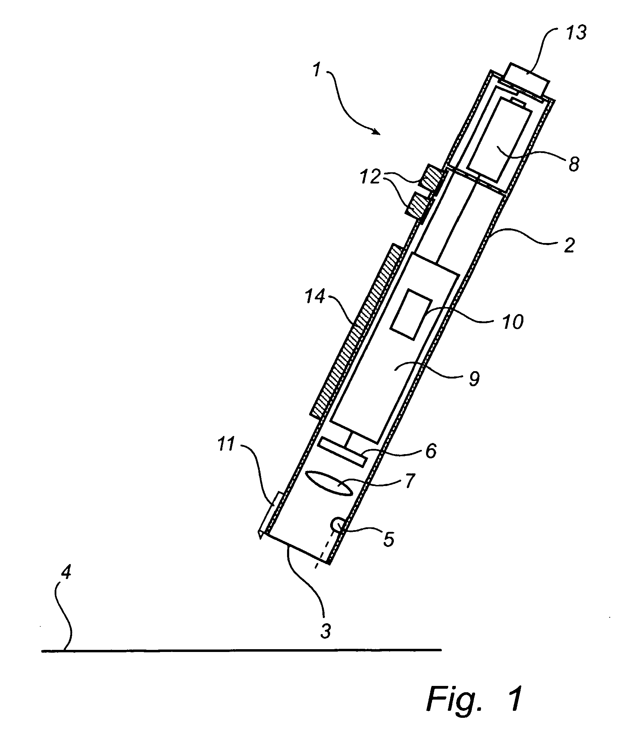

Fig. 1 shows a device 1 for data decoding. In this example, the device 1 is used to decode or determine a position. In this case data is more specifically two coordinates defining a position. The device comprises a casing 2 which is approximately of the same shape as a pen. In the short side of the casing there is an opening 3. The short side is intended to abut against or to be held a short distance from a surface 4, which is provided with a coding pattern (not shown) which stores data to be decoded. The device 1 comprises at least one light-emitting diode 5 for illuminating the surface 4, and a light-sensitive area sensor 6, for example a CCD or CMOS image sensor, for recording a two-dimensional digital image of a partial area of the coding pattern on the surface 4. Optionally, the device 1 can also contain a lens system 7.

The power supply for the device 1 is obtained from a battery 8, which is mounted in a separate compartment in the casing 2.

The device 1 further comprises image-processing means 9 for determining the position on the basis of the image recorded by the sensor 6 and, more specifically, a processor unit 10 which is programmed to record images from the sensor 6 and to carry out position determination on the basis of these images.

In this example, the device 1 also comprises a pen point 11, by means of which ordinary pigment-based writing can be written on the surface 4. The pen point 11 can be extendable and retractable so that the user can control whether or not it is to be used. In certain applications, the device does not need to have a pen point at all.

The device 1 can further comprise buttons 12, by means of which the device can be activated and controlled. It can also comprise a transceiver 13 for wireless transmission, for example using infrared light or radio waves, of information to and from the device, and a display 14 for displaying information based on decoded data.

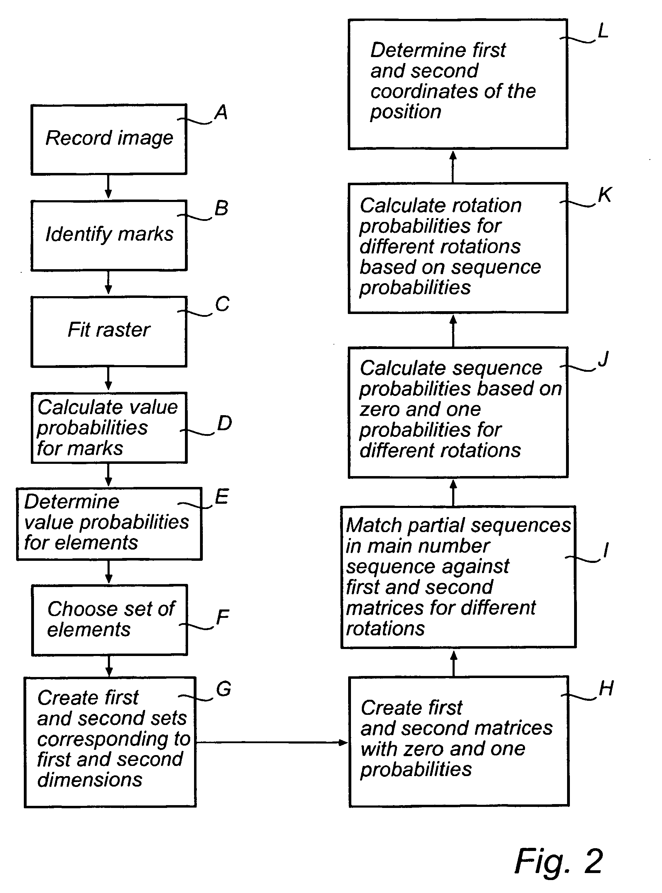

Now follows a description, with reference to the flow chart in Fig. 2, of an example of how a coding pattern can be decoded by means of probability calculations. The coding pattern to be decoded is of the type described in WO 01/26032.

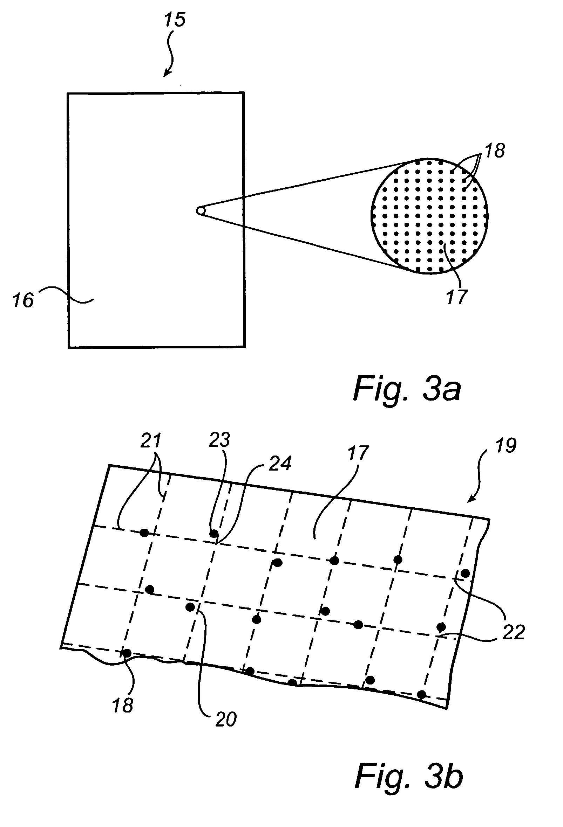

Fig. 3a shows a sheet of paper 15 that has a surface 16 that is provided with a coding pattern in the form of an optically readable position code 17. The position code consists of marks 18 and is greatly enlarged for the sake of clarity. Fig. 3b shows a further enlarged part 19 of the position code 17 in Fig. 3a. The device is arranged to record an image of a partial area of the position code (step A), to identify a plurality of marks 18 in the image (step B) and to fit to the image a reference system in the form of a raster (step C) with raster lines 21 that intersect at raster points 22. The fitting is carried out in such a way that each of the marks 18 is associated with a raster point 22. For example, the mark 23 is associated with the raster point 24. Consequently the raster fitting makes it possible to determine to which raster point each mark belongs. In this example, the raster has the form of a square grid, but also other forms are possible. WO 01/75783, WO 01/26034 and SE 0104088-0 (see also US 2005/199729, US 2003/122855, WO 03/049023, EP 1456811) disclose in more detail fitting of a raster to marks in an image.

In the "ideal" coding pattern, one and only one mark is associated with each raster point. Owing to deformations and deficiencies in the imaging of the coding pattern, it may be difficult to determine in an image of the coding pattern which marks belong to the coding pattern and which of a plurality of marks is the one that is to be associated with a certain raster point. For this reason, it is possible to associate in this example a plurality of marks with one and the same raster point in the decoding of data. The marks associated with a raster point together form an element belonging to the raster point.

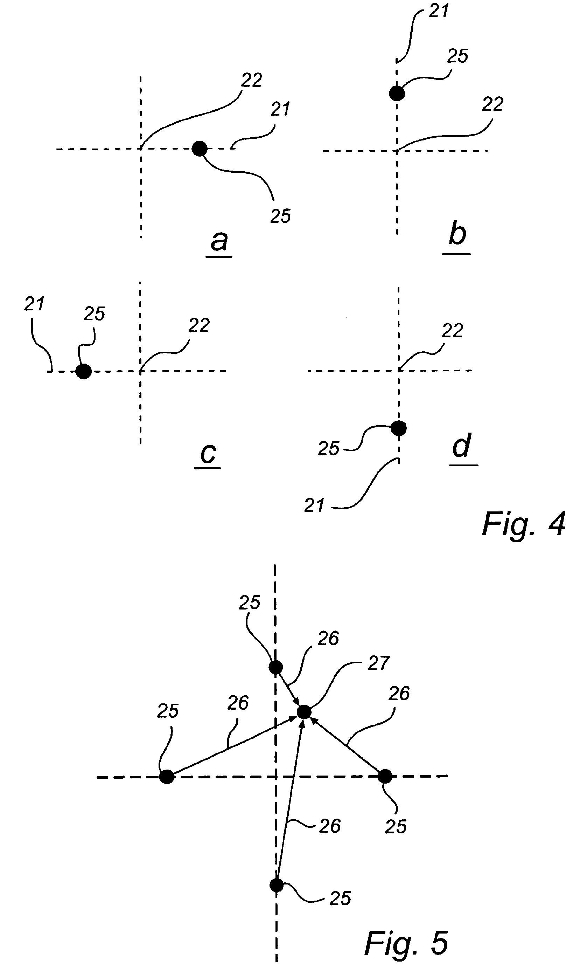

In the coding pattern in this example, the value of the marks 18 is defined by their displacement in relation to the raster points 22 with which they are associated. More specifically, it is the position of a point of a mark relative to a raster point that defines the value of the mark. This point is typically the main point of the mark. In the coding pattern in this example, there are four ideal locations for each mark. These locations are on each of the four raster lines 21 extending from the raster point 22 with which the mark is associated. The locations are situated at an equal distance from the raster point. The ideal locations 25 for a mark are shown enlarged in Figs 4a-d. They have the value "0" in Fig. 4a, the value "1" in Fig. 4b, the value "2" in Fig. 4c and the value "3" in Fig. 4d. Each mark can thus represent four different values "0-3".

For various reasons, the marks identified in the recorded image often do not have an ideal location. In many cases it can therefore be difficult to unambiguously determine one value for a mark. Because of this, the device is arranged to calculate, for each identified mark, an associated value probability for each value "0-3" that the mark defines this value (step D). The value probabilities for each mark are a decreasing function of the distances 26 from the mark 27 to each of its ideal locations 25, see Fig. 5, or more specifically, typically from the main point of the mark 27 to each ideal location. The marks can be assumed to be normally distributed around the ideal locations. This means that the value probabilities, $P(d_i)$, can be calculated by the formula $P(d_i) = k \exp(-(d_i)^2/v)$, where k = a constant, $d_i$ = the distance from a mark to an ideal location and v = a constant, in this example the variance of the distance. The variance can be determined empirically. Four value probabilities can thus be calculated for each mark. It sometimes happens that a mark is found in the centre of a raster point. In these cases, the four value probabilities for the mark will be equal, since the distances from the mark to each of the ideal locations are equally large. The case when there is no mark associated with a raster point, i.e. the associated element contains zero marks, is treated as if there was a mark in the centre of the raster point, that is the value probabilities are equal.

If there is more than one mark, for example three, associated with a raster point, i.e. three marks in the associated element, there are a total of 3x4 value probabilities for the raster point or element. The device is therefore arranged to determine, for each raster point or element and for each value, a value probability that the marks associated with the raster point together define this value (step E). These value probabilities for a raster point could thus also be called raster point probabilities. By calculating the value probabilities for the raster points, all the marks in the recorded image may be taken into consideration in the position determination and the risk of information being lost is minimised. Since the above means that for each element, value probabilities are calculated that the element defines each of the values, the values "0"-"3" are called element values in the rest of the description.

The value probabilities for an element can be determined by the value probabilities for the marks in the element being compared, the highest value probability being selected for each possible element value. Alternatively, the value probabilities for the element can be weighted sums of the value probabilities for each of the possible element values for the marks in the element. The value probabilities for the element can, of course, also be determined in other ways than those mentioned above.

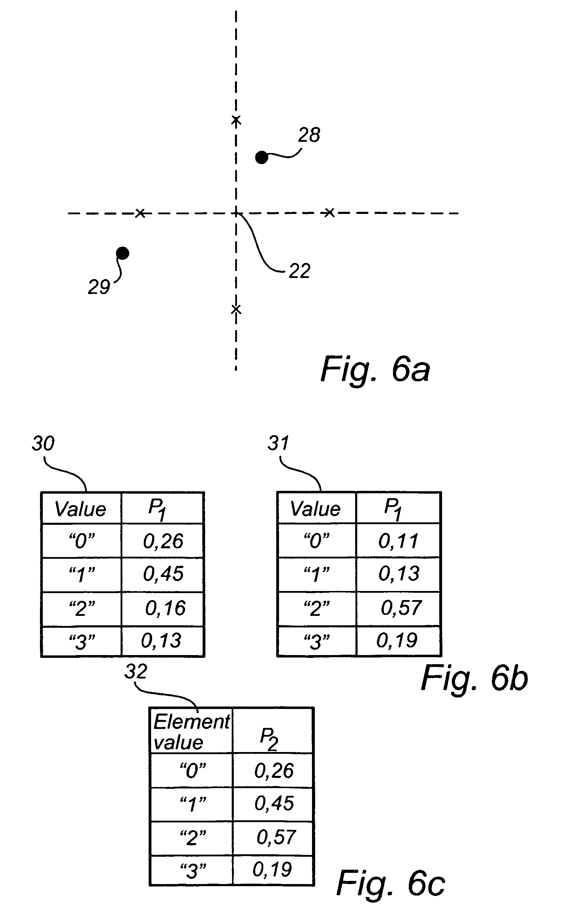

Calculation of the value probabilities for an element in this example is illustrated by means of the number example in Fig. 6. Fig. 6a shows a raster point 22 with two associated marks 28 and 29. The marks 28 and 29 together constitute the element belonging to the raster point 22. The Tables 30 and 31 in Fig. 6b contain the value probabilities $P_1$ for the possible values of the respective marks. The Table 32 in Fig. 6c contains the resulting value probabilities $P_2$ for the possible element values of the element. In this example, the value probabilities for the element are relative. Alternatively, they can instead by normalised in a suitable way. If there is only one mark associated with a raster point, i.e. one mark in the associated element, the value probabilities for the mark and the element are obviously the same.

When recording an image, the distance from the device to the surface influences how large a part of the position code is recorded and thereby also how large a raster can be fitted to the image. For converting the image into a position, a predetermined number of elements is used, which in this example is 8x8 elements. If more than 8x8 raster points have been fitted to the image, an excess of elements is thus identified. The device is therefore further arranged to choose, from all the identified elements, the set of elements that provides the most information about the position on the surface (step F). This set of element is, but need not be, continuous. The elements in the set of elements correspond in this example to a raster point matrix with raster points fitted to the image, but this is not a requirement. In other words, the purpose is to select the elements with associated value probabilities for each element value which maximise an information measure for the recorded image. For this purpose, an entropy is calculated for each of the identified elements. Thereafter the 8x8 elements are chosen that give the smallest entropy sum, which corresponds to the maximum information measure for the recorded image. If the value probabilities for the elements are normalised so that

$$\sum_i P_{2,i} = 1 \, ,$$

the entropy H for an element is calculated according to the following formula:

$$H = -\sum_i P_{2,i} \log_2(P_{2,i})$$

where $P_{2,i}$ is the value probability of the element for the element value i (i=0, 1, 2, 3) and where $\log_2$ is the two-logarithm. The entropy for an element is thus maximal when its value probabilities are equally high and minimal when all except one of the value probabilities are zero. An alternative to choosing 8x8 elements by means of entropy calculations is instead to use the highest value probability for each element as an information value. In this case, the continuous 8x8 elements are selected which maximise an information measure that consists of the sum of the information values for the 8x8 elements.

The coding pattern used in this example codes, as mentioned, two coordinates for a point on the surface 4. These coordinates are separately decodable. Therefore they can be called data in two dimensions. Each mark in the coding pattern codes more specifically a first bit which is used to decode the first coordinate and a second bit which is used to decode the second coordinate.

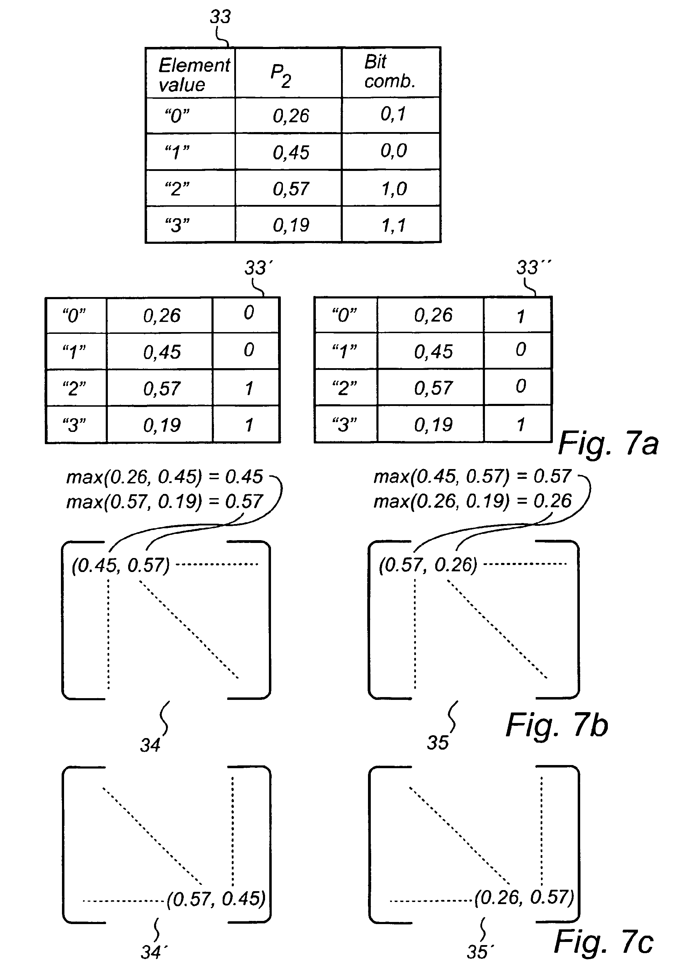

In the decoding of the coding pattern in the recorded image, each possible element value "0"-"3" for an element is therefore converted into a first and a second decoding value which in this example thus are binary. The device is thus arranged to convert, for each of the 8x8 elements in the set of elements, the element values "0"-"3" into the four different bit combinations (0, 1), (0, 0), (1, 0) and (1, 1). The bit combinations have the value probabilities belonging to the element values, for each element, see the continuation of the previous number example in Table 33 in Fig. 7a. In the bit combinations, the first bit, i.e. the first decoding value, refers to the first dimension and the second bit, i.e. the second decoding value, to the second dimension. The value probability $P_2$ for the corresponding element value is associated with the first and second decoding values. The set of elements can thus be used to create a first set of first decoding values with associated value probabilities for the first dimension, and a second set of second decoding values with associated value probabilities for the second dimension (step G). Table 33 in Fig.7 describes an element in the set of elements. The Tables 33' and 33" contain the corresponding first decoding values in the first set with associated value probabilities and respectively the second decoding values in the second set with associated value probabilities. Each of the first and the second decoding values is, as is evident from that stated above, either a zero or a one.

The device is arranged to associate for each element in the set of elements each of the different possible first decoding values in the first set with one value probability, and each of the different possible second decoding values in the second set with one value probability. Since the possible first and second decoding values in this example are zero and one, the above results in one value probability for the decoding value zero and one for the decoding value one in the first and second sets for each element in the set of elements. In the following, the value probability for the decoding value zero is called zero probability and the value probability for the decoding value one is called one probability.

Referring to Fig. 7, Table 33', in this example, the above is carried out for each of the elements in the set of elements by comparing the value probabilities in the first set that correspond to the first decoding value being a zero. Then the highest value probability is chosen as zero probability and is saved in a first matrix 34. In the same way, the value probabilities in the first set that correspond to the first decoding value being one, are compared. Then the highest value probability is chosen as one probability and is also saved in the first matrix 34. Referring to Table 33", the above procedure is subsequently repeated for the value probabilities in the second set, the second decoding values and a second matrix 35. The first and the second sets are thus used to create a first and second matrix with zero and one probabilities (step H). The result is illustrated in the continuation of the number example in Fig. 7b. Alternatively, a first and a second matrix with zero and one probabilities for the 8x8 elements in the set of elements are created by the value probabilities in the first set that correspond to the first decoding value being zero being added, the sum being stored as the zero probability, and by the value probabilities in the first set that correspond to the first number being one being added, the sum being stored as the one probability. The procedure is then repeated for the value probabilities in the second set and the second decoding values.

Thus the 8x8 elements in the set of elements now correspond to two matrices 34 and 35, each with 8x8 matrix elements, where each of the matrix elements contains one zero probability and one one probability. By means of these first and second matrices, coordinates can be determined for the position.

An alternative to choosing the set of elements after the determination of the value probabilities for all elements in the recorded image is to wait until matrices corresponding to the matrices 34 and 35 have been determined for all the identified elements. In this case, 8x8 matrix elements in each matrix can then be selected based on the corresponding zero and one probabilities. One way of doing this is to select 8x8 matrix elements in which one of the zero and one probabilities is high and the other low. In this case, the matrix elements corresponding to the same elements need not be selected for determination of both coordinates, the calculations proceeding with different corresponding elements for the two matrices.

In this example the position code is in the first dimension based on a first cyclic main number sequence. This gives a condition for the relation between the element values of the elements. The first cyclic main number sequence has the property that the place therein for each partial sequence of a predetermined length is unambiguously determined. In this example the predetermined length is 6. If thus 6 succeeding numbers are taken in an arbitrary place in the first cyclic main number sequence, these six numbers occur only once in the first main number sequence in this succession. The property also applies if the end of the first main number sequence is connected to the beginning of the first main number sequence. Therefore, the first main number sequence is called cyclic. In this example a binary main number sequence is used. If the place for a partial sequence with six numbers is to be unambiguously determined, the first main number sequence can then maximally have the length $2^6=64$ and the partial sequences of the length 6 can have places 0-63 in the first main number sequence. If, however, a first main number sequence of the length 63 is chosen, it is possible, as will be evident from the following, to provide improved error correction properties. In the following, it will thus be assumed that the length of the first main number sequence is 63 and that it thus defines unique places in the range 0-62.

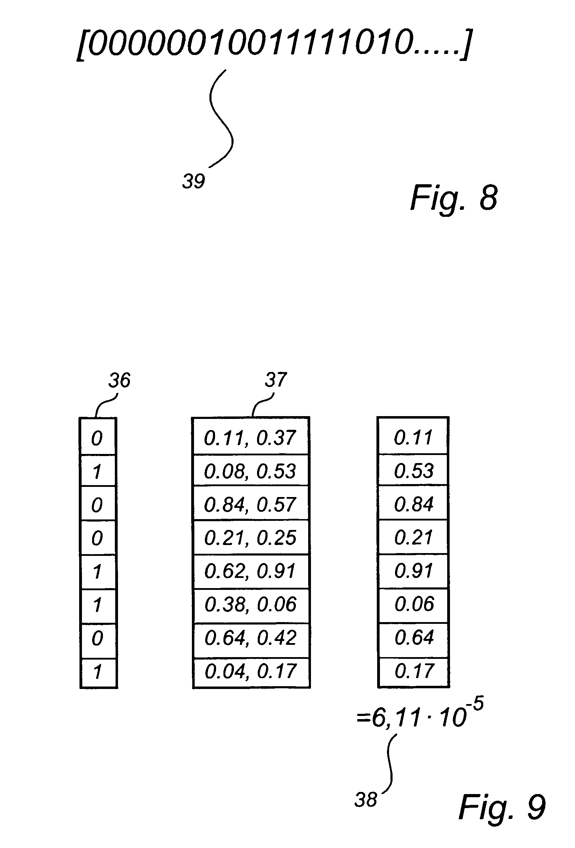

Fig. 8 shows an example of a first cyclic main number sequence that can be used in connection with the position coding. The partial sequence 0,0,0,0,0,0 has, for instance, the unambiguous place 0, the partial sequence 1,1,1,1,1,0 the unambiguous place 9 and the partial sequence 1,1,1,0,1,0 the unambiguous place 11 in the first main number sequence. For determining a position on the surface, 6x6 elements must be identified in the recorded image. As discussed above, however, use is made of 8x8 elements for a position determination and the reason for this will be evident from the following. As stated above, the first cyclic main number sequence, on which the position code is based in the first dimension, has the property that it contains merely mutually unique partial sequences of the length 6. Consequently, also the place in the first cyclic main number sequence for each partial sequence of the length 8 is unambiguously determined. This fact it utilised in the determination of the coordinates for the position on the surface.

The device is arranged to match each of the unique partial sequences of the length 8 in the first cyclic main number sequence with each of the columns in the first matrix 34 (step I). The method is illustrated in Fig. 9. The Figure shows an example of a binary partial sequence 36 of the length 8 and a column 37 in the first matrix 34 (Fig. 7b), said column having matrix elements which each contain a zero probability and a one probability corresponding to the first decoding value being zero and one respectively. For each matrix element, one of the zero and one probabilities is selected depending on the corresponding number in the partial sequence 36. The first number in the partial sequence 36 is, for instance, zero, which means that the zero probability is selected for the first matrix element in the column 37. The second number in the partial sequence is one, which means that the one probability is selected for the second matrix element in the column 37. For each partial sequence in the first main number sequence, for each column in the first matrix 34, the device is in addition arranged to calculate a first sequence probability (step J) by multiplication of the correspondingly selected zero and the one probabilities for the matrix elements. In Fig. 9, the first sequence probability 38 corresponding to the partial sequence 36 and the column 37 has been calculated. After this operation, there will thus be 63 first sequence probabilities with a respective associated unique sequence value for each column in the first matrix 34. These sequence values are defined by the places of the corresponding partial sequences in the first cyclic main number sequence. The device is arranged to select for each column the highest first sequence probability and the corresponding sequence value and save these.

The position code in the second dimension is here based on a second cyclic main number sequence which in this example has the same properties as the first cyclic main number sequence.

The device is further arranged to match, in a manner corresponding to that above, each of the unique partial sequences of the length 8 in the second cyclic main number sequence with each of the rows in the second matrix 35. The rows in the matrix 35 have, just like the columns in the matrix 34, matrix elements which each contain one zero probability and one probability corresponding to the second decoding value being zero and one respectively. For each matrix element, one of the zero and one probabilities is selected depending on the corresponding number in a partial sequence in the second cyclic main number sequence. For each partial sequence in the second main number sequence, for each row in the second matrix 35, the device is further arranged to calculate a second sequence probability (step J) by multiplication of the correspondingly selected zero and one probabilities for the matrix elements. After this operation, there will thus be 63 second sequence probabilities with a respective associated unique sequence value for each column in the second matrix 35. These sequence values are defined by the places of the corresponding partial sequences in the second cyclic main number sequence. The device is further arranged to select for each row the highest second sequence probability and the corresponding sequence value and save these.

The position code used in this example is based on use of different rotations or circular shifts of the cyclic main number sequences. In order to code positions in, for instance, the x direction, the first main number sequence is printed or arranged in some other manner rotated or circularly shifted in different ways in columns across the surface, i.e. in the y direction orthogonally to the direction in which positions are to be coded, from above and down. The main number sequence may be printed repeatedly in the same column, which is necessary if more positions than what corresponds to the length of the main number sequence are to be coded in the y direction. The same rotation of the main number sequence is then used in all repetitions. This means that different rotations can be used in different columns.

Each pair of adjoining columns defines a difference number D. The difference number D is given by the difference between the places in the main number sequence for the first partial sequence in each column. If instead the difference between the places for the partial sequences is taken one step down in the columns, the result will be the same as the places will be offset in the same way. The difference number D will thus always be the same independently of at what "height" in the columns the places of the partial sequences in the main number sequence are compared. For each pair of columns, the difference number D is thus constant in the y direction. The difference numbers between adjoining columns form a set of difference numbers than can be used to obtain a coordinate for a position on the surface in the first dimension.

The position code in a second direction, for instance in the y direction in this case, can be based on the same principle as the position code in the first dimension. The second main number sequence is then arranged with different circular shifts in rows on the surface, i.e. in the x direction, from the left to the right. Difference numbers are defined between adjoining rows and these difference numbers form a set of difference numbers that can be used to obtain a coordinate for a position on the surface in the second dimension.

Thus the position code consists of one partial position code for the first direction and one partial position code for the second direction.

As is evident from that stated above, the partial sequences are not written with their explicit values, but with a graphical coding. In the graphical coding, marks define a superposing of the partial position codes.

Since the position code is based on main number sequences which are arranged in predetermined directions on the surface, the marks must be decoded in these directions for the position determination to be correct. The correct decoding directions are, as mentioned above, from above and down and from the left to the right.

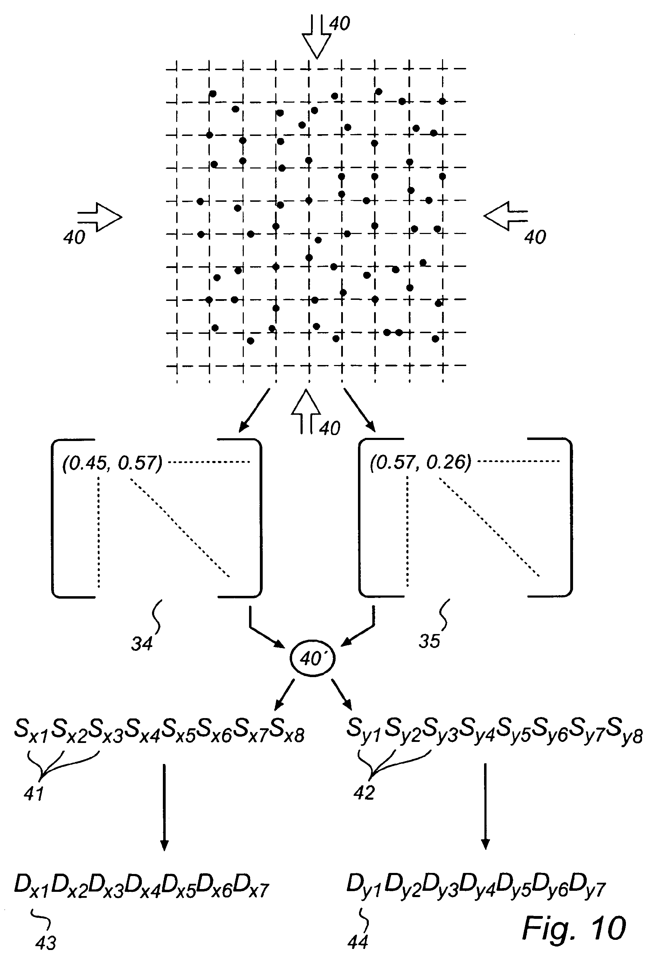

The device 1 can, when recording an image, be held rotated in different locations relative to the surface and the position code. There are four possible recording rotations which are shown as arrows 40 in Fig. 10. The recorded image of the position code does not in itself reveal the relative rotation between the position code and the device since the position code has essentially the same appearance if it is rotated through 0, 90, 180 or 270 degrees. When the position code has been rotated, the direction of the displacement of each mark in relation to the raster point with which it is associated will, however, be changed. This results in turn in the bit combination (first decoding value, second decoding value) which codes the displacement of the mark being changed. With the "correct" rotation of the position code, the marks are arranged in the correct decoding directions from above and down in the columns as well as from the left to the right in the rows. If the correct rotation of the position is zero, the following applies to the incorrect rotations:

■ 90 degrees clockwise: the columns with marks in the "correct" rotation, which marks are arranged from above and down, will be rows with marks arranged from the right to the left, i.e. in the incorrect decoding direction, and the rows with marks in the "correct" rotation, which marks are arranged from the left to the right, will be columns with marks arranged from above and down, i.e. in the correct decoding direction.

■ 180 degrees: the columns with marks in the "correct" rotation will be columns with marks arranged from below and up, i.e. in the incorrect decoding direction, and the rows with marks in the "correct" rotation will be rows with marks arranged from the right to the left, i.e. in the incorrect decoding direction.

■ 270 degrees clockwise: the columns with marks in the "correct" rotation will be rows with marks arranged from the left to the right, i.e. in the correct decoding direction, and the rows with marks in the "correct" rotation will be columns with marks arranged from below and up, i.e. in the incorrect direction.

If the marks in the columns and the rows are arranged in the incorrect decoding direction, the zero and one probabilities for each element will be inverted when decoded.

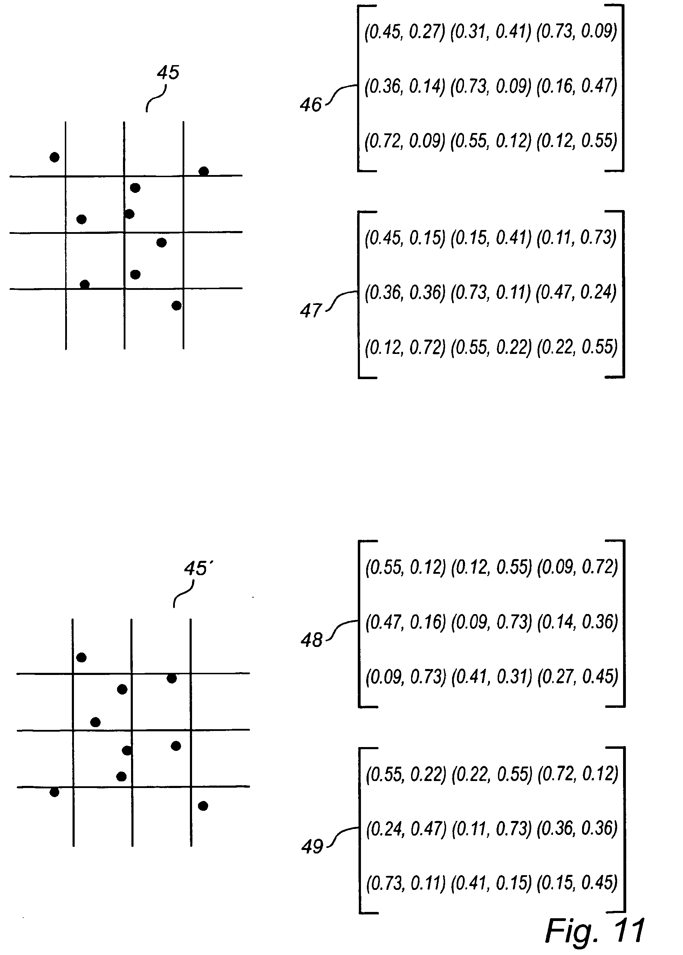

Therefore the device is arranged to test, as will be described below, different rotations of the partial area of the position code in the recorded image. The operation that was carried out on the first and the second matrix 34 and 35, respectively, i.e. the matching of the partial sequences in the cyclic main number sequences against columns and rows respectively in the matrices (step I), the calculation of sequence probabilities (step J), and the selection of the highest sequence probabilities with corresponding sequence values for the columns and the rows respectively, is carried out also on the first and the second matrix 34 and 35 rotated through 180 degrees and "inverted", which matrices in Fig. 7c are designated 34' and 35' respectively. These rotated, inverted matrices 34' and 35' correspond to an inverted version of the partial area of the position code in the recorded image. The reason for this is explained in Fig. 11 which shows an example of a partial area of a position code in a recorded image. In the Figure, only 9 marks are used for the sake of simplicity which are each associated with one raster point for the illustration. The position code 45 is the one recorded in the image. The position code 45' is the same position code inverted. The matrices 46 and 47 correspond to the matrices 34 and 35 respectively for the position code 45 turned the right way round, and the matrices 48 and 49 correspond to the matrices 34' and 35' respectively for the inverted position code 45'. If the matrices 48 and 49 for the inverted position code are rotated through 180 degrees and inverted, the matrices 46 and 47 will be obtained for the position code turned the right way around. By inversion is in this context meant that the zero and one probabilities in each matrix element change places.

After the above procedure, there is a highest sequence probability with a corresponding sequence value for each column in the matrices 34 ad 34', and for each row in the matrices 35 and 35'. For each of the matrices 34, 34', 35 and 35', the device is then arranged to calculate a rotation probability (step K) by multiplication of the corresponding highest sequence probabilities. Based on the sequence values corresponding to the highest sequence probabilities for that of the matrices 34 and 34' which corresponds to the highest rotation probability, and the sequence values corresponding to the highest sequence probabilities for that of the matrices 35 and 35' which corresponds to the highest rotation probability, coordinates for the position can be calculated.

As described above, it is not necessary to examine all four rotations. This is simply explained by means of an example. Now assume that the partial area of a position code in an image that is recorded is the one (45) shown in Fig. 11. Further assume that the "correct" rotation of the position code is rotated through 90 degrees clockwise relative to the recorded one. According to the above description, where the correct rotation is assumed to correspond to a rotation through 0 degrees, this means that the position code 45 in the recorded image is rotated through 270 degrees clockwise relative to the "correct" rotation. Consequently, the position code 45' is rotated through 90 degrees clockwise relative to the "correct" rotation. In the manner described above, the position codes 45, 45' are now decoded in Fig. 11. The columns with marks in the "correct" rotation through 0 degrees are, as described above, arranged in the correct decoding direction in the position code 45. The correct direction causes the sequence probabilities, and consequently the rotation probability, corresponding to these rows, to be high. The rows with marks in the correct rotation are, as described above, columns arranged in the incorrect decoding direction in the position code 45. The incorrect direction combined with the inversion causes the value probabilities, and consequently the rotation probability, corresponding to these columns, to be low. The relationship will be the opposite for the position code 45'. The columns with marks in the correct rotation through 0 degrees are, as described above, rows arranged in the incorrect decoding direction in the position code 45'. The incorrect direction causes the sequence probabilities, and consequently the rotation probability, corresponding to these rows, to be low. The rows with marks in the correct rotation are, as described above, columns arranged in the correct decoding direction in the position code 45'. The correct direction causes the sequence probabilities, and consequently the rotation probability, corresponding to these columns, to be high.

When recording the "correct" rotation of the position code, columns and the rows will, as mentioned above, extend in the "correct" direction in the image. This means for the example in Fig. 7 that the rotation probabilities for the matrices 34 and 35 will both be higher than the rotation probabilities for the matrices 34' and 35'. This is an indication that the "correct" rotation of the position code has been recorded. Thus, a first coordinate can be calculated based on the sequence values corresponding to the highest sequence probabilities for the matrix 34, and a second coordinate can be calculated based on the sequence values corresponding to the highest sequence probabilities for the matrix 35.

When recording the position code rotated through 180 degrees in relation to the "correct" rotation, the columns and the rows will extend in the "incorrect" direction in the image. This means for example in Fig. 7 that the rotation probabilities for the matrices 34' and 35' will both be higher than the rotation probabilities for the matrices 34 and 35. This is an indication that the position code has been recorded in the rotation through 180 degrees in relation to the "correct" rotation. Thus, a first coordinate can be calculated based on the sequence values corresponding to the highest sequence probabilities for the matrix 34', and a second coordinate can be calculated based on the sequence values corresponding to the highest sequence probabilities for the matrix 35'.

Recording of the position code rotated through 90 or 270 degrees clockwise in relation to the "correct" rotation is indicated by the highest rotation probabilities not belonging to the same rotation. If it is assumed that the matrices 34 and 35 in Fig. 7 originate from a position code which is rotated through 90 degrees clockwise in relation to the correct direction, the rotation probability for the matrix 34 will be higher than the rotation probability for the matrix 34', and the rotation probability for the matrix 35 will be lower than the rotation probability for the matrix 35'. In this case, the second coordinate is calculated based on the sequence values corresponding to the highest sequence probabilities for the matrix 34, and the first coordinate is calculated based on the sequence values corresponding to the highest sequence probabilities for the matrix 35'. If it is assumed instead that the matrices 34 and 35 in Fig. 6 originate from a position code which is rotated through 270 degrees clockwise in relation to the correct direction, the second coordinate is instead calculated based on the sequence values corresponding to the highest sequence probabilities for the matrix 34', and the first coordinate is calculated based on the sequence values corresponding to the highest sequence probabilities for the matrix 35.

What allows the detection of the rotation of the position coding in the recorded image thus is the fact that the rotation probability for a matrix is changed when the matrix is rotated through 90, 180 or 270 degrees. If the rotation of the position code is different from zero, i.e. if the rotation of the position code in the recorded image is incorrect, the rotation probability as stated above will be low. This depends on the fact that the unique partial sequences of the length 8 in the cyclic main number sequences do not occur inverted or reverse in the main number sequences. If such a condition should be satisfied for the main number sequences for partial sequences of the length 6, it would mean that the main number sequences would be reduced significantly, which in turn would imply that fewer positions could be coded. This is thus one reason why 8x8 elements are used for the position determination although only 6x6 are theoretically required.

The same basic principles as the ones used in the rotation detection can be used for error correction. For instance, the main number sequence can be selected so that partial sequences of a predetermined length, which is longer than the one required for position determination, do not occur with one bit inverted in the main number sequence.

Then, if all bits except one in such a longer partial sequence can be detected with certainty, the incorrect bit can be corrected. This is another reason why 8x8 elements are used for the position determination although only 6x6 are theoretically required.

Thus, by an intelligent selection of the main number sequence, the error detection and error correction properties of the coding pattern can be considerably improved.

The property of the cyclic main number sequences that partial sequences of the length 8 do not occur inverted or reverse can, however, not be provided for a 64 bit long main number sequence, which is the reason why the length of the main number sequences has instead been selected to be 63.

In decoding, redundant information is thus used to obtain error correction properties. In the example described above, 8x8 elements are used in the decoding, although the position information can be extracted based on 6x6 raster points, i.e. there is 56 bit redundant information $[(8^2-6^2)x2]$ for determining the position. In decoding, information in the current image is matched, by columns and by rows, with the different partial sequences that may occur in the position code, while using the value probabilities belonging to the current image. The combination of redundant information, probabilities and a known condition for the relation between the values of the elements gives good insensitivity to interference in the current image. The value of each individual mark thus decreases in importance since the value of the individual mark must correspond to the other values in that of the partial sequences which gives the highest sequence probability.

If the need for error correction is more limited, the device can alternatively be arranged to directly select, for each of the columns in the first matrix, and for each of the rows in the second matrix, a sequence, and thus a sequence value, corresponding to the highest of the zero and one probability for each element.

When the rotation 40' of the recorded position code in relation to the "correct" rotation has been established, the first and second coordinate of the position can thus be determined (step L). This is carried out as described above, based on sequence values which in Fig. 10 are designated $Sx_1$-$Sx_8$ (41) for the first coordinate and $Sy_1$-$SY_8$ (42) for the second coordinate.

The device is arranged to calculate for the sequence values $Sx_1$-$Sx_8$ and $Sy_1$-$Sy_8$ differences between adjacent sequence values, which results in two sets, 43 and 44, of seven difference numbers $Dx_1$-$Dx_7$ and $Dy_1$-$Dy_7$ each. These difference numbers are then used to generate a first coordinate and a second coordinate.

For the calculation of the first coordinate, however, only six of the sequence values $Sx_1$-$Sx_8$, i.e. five of the difference numbers $Dx_1$-$Dx_7$, are necessary as described above. According to this example, the sequence values $Sx_2$-$Sx_7$ and thus the difference numbers $Dx_2$-$Dx_6$ are used. The same applies to the second coordinate that is then calculated from the sequence values $Sy_2$-$Sy_7$ and thus the difference numbers $Dy_2$-$Dy_6$. Alternatively, only six sequence values are determined for each direction, $Sx_2$-$Sx_7$ and $Sy_2$-$Sy_7$.

The conversion from difference numbers to coordinates can be carried out in many ways, for example in the way that is described in WO 01/26033 and SE 0103589-8 (see also US 2007/064818, US 2003/128194, WO 03/038741, EP 1451767).

In the example described above, 8x8 elements have been identified, for data decoding, in a recorded image. However, it may sometimes happen that it is not possible to identify so many elements. "Empty" additional elements are then added to the elements that can be identified in the image to obtain a total of 8x8 elements. As described earlier, the value probabilities for an "empty" element are all equal.

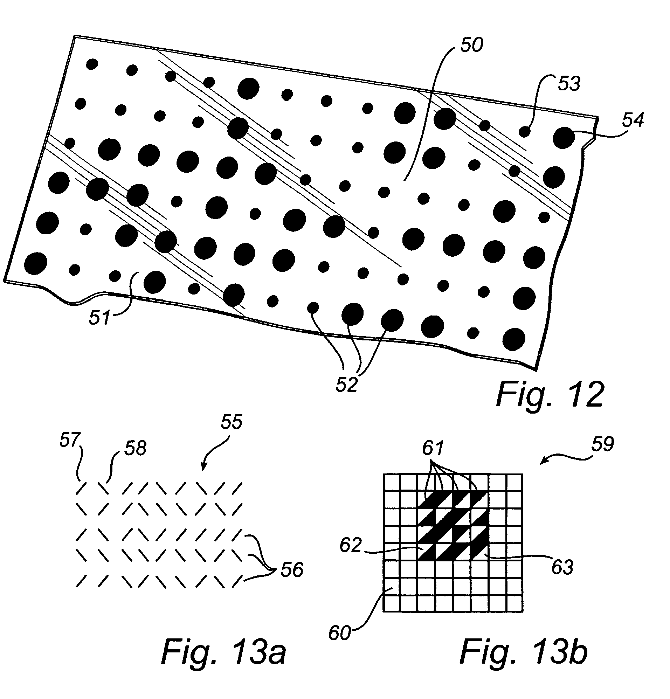

Fig. 12 shows a sheet of paper which has a surface 50 that is provided with an alternative position code 51 which consists of marks 52 and which for the sake of clarity is greatly enlarged. In this case, the value of the marks 52 is defined by their size. This type of position code is described in WO 00/79383.

In this case, the device is arranged, just as described above, to record an image of a partial area of the position code, to identify a plurality of marks in the image, and to fit a raster to the image so that each of the marks is associated with a raster point. Like in the case with the above position code, the marks associated with a raster point constitute an element belonging to the raster point. Here are two possible values for each mark. The small mark 53 corresponds to the value zero and the large mark 54 corresponds to the value one, and there is an ideal size of the small and large marks.

The identified marks are usually not of an ideal size. In many cases, it can therefore be difficult to unambiguously determine a value for each mark 52. The device is therefore arranged as above to calculate, for each identified mark, an associated value probability for each value "0" and "1" that the mark defines this value.

The size of the marks 52 may be assumed to be normally distributed around the ideal sizes, which means that the value probabilities P(r) can be calculated by the formula $P(r)= k \exp(-(R_i-r)^2/v)$, where k= a constant, $R_i$= ideal size, r= size of a mark and v= a constant, in this example the variance of the size. $R_i$ and r can be, for instance, areas or radii. The variance can be determined empirically.

Thus, for each mark, two value probabilities can be calculated. The case in which there is no mark associated with a raster point, i.e. the associated element contains zero marks, is dealt with as if there were two marks of the ideal size, one with the value "0" and one with the value "1", associated with the raster point.

If there is more than one mark, for example three, associated with a raster point, i.e. three marks in the associated element, then there are a total of 3x2 value probabilities for the raster point or element. The device is therefore arranged as above to determine, for each raster point or element and for each value, value probabilities that the marks associated with the raster point together define this value. For each element, value probabilities are thus calculated that the element defines each of the values, and therefore the values "0" and "1" can also in this case be called element values.

The value probabilities for an element can be determined, as above, by the value probabilities for the marks in the element being compared, the highest value probability being selected for each element value. Alternatively, the value probabilities for the element can be weighted sums of the value probabilities for the element values for the marks in the element. In the case of this position code, the value probabilities for the element can, of course, also be determined in other ways than those mentioned above.

Also in this case, the value probabilities for a mark and an element are the same if the element only contains that mark.

Like with the position code described by way of introduction, the value probabilities for the elements are then used to determine a position on the surface in a manner corresponding to that described in detail above.

One alternative as regards the latter position code is to let the value probabilities to be a function of the total dark area corresponding to a raster point. This alternative could be useful if there is only one mark associated with each raster point. Sometimes it may in fact happen that for some reason a mark in a recorded image of the position code is not a completely continuous area. Then there is a risk that the mark appears to be split and thus, is perceived by the device as several marks.

In the above described examples, probabilities have been multiplied on several different occasions to obtain various results. It can be pointed out that in cases in which the probabilities that are to be multiplied are described by exponential functions, logarithms can be used, so that the results are obtained instead by summing up exponents according to the following formula.

$$\mathtt{ln\,(exp\,(a)\cdot exp\,(b)\,)\,=\,ln\,(exp\,(a)\,)\,+\,ln\,(exp\,(b)\,)\,=\,a\,+\,b}$$

Figs 13a and b show two additional types of codes that can be used in connection with the present invention. The code 55 in Fig. 13a consists of marks 56 in the form of small lines. The values of the marks 56 depend upon the inclination of the lines. The mark 57 corresponds to the value zero and the mark 58 corresponds to the value one. This type of code is described in US-A-5,245,165. The code 59 in Fig. 13b consists of a square grid 60, with triangles 61 being placed in the squares. The square 62 has the value zero and the square 63 has the value one.

Another code that can be used in connection with the present invention consists of marks that have two different ideal shapes, a first and a second ideal shape, with the density of the marks on a surface providing information about the position. In this case, the density varies in two dimensions, the density of marks with a first ideal shape varying in a first dimension and the density of marks with a second ideal shape varying in a second dimension.

There are a plurality of other codes that can be used in connection with the present invention, the variants described above only being regarded as examples.

When an image of a partial area of a position code has been recorded, the marks are identified by dark continuous areas in the image being searched out. It is, however, the case that the dark continuous areas in the image are not necessarily marks in the position code. There are sometimes impurities, for instance in the form of dust, on the surface on which the position code is printed. These impurities cause noise marks in the recorded image, which noise marks may then by mistake be identified as marks in the position code. Also sensor noise may cause noise marks in the recorded image. Noise marks in the recorded image may also originate from a defect on one of the components in the device, for instance damaged pixels in the sensor.

In the first case, in which the values of the marks are determined based on their distance from the ideal locations, there is however a factor that prevents any noise marks from having an effect on the result of the position determination. If a good fit of a raster has been made for the recorded image, the noise marks will be located at a greater distance from the ideal locations than the marks of the position code. In the second case, there is another factor that prevents the noise marks from having an effect on the result. The noise marks are usually much smaller than the marks of the position code. When determining the value probabilities for an element, the value probabilities for the noise marks will thus be of less importance since they are much lower than those for the marks of the position code.

A person skilled in the art will recognise that the above examples can be varied in a number of ways.

There are two different parameters for the marks in the position codes that have been discussed in this application, namely the location of the marks and their shape/size. Depending upon which position code is used, one of the parameters will indicate the value of the marks. The other parameter can then suitably be used to calculate a probability of the identified mark being a mark in the position code.

In the case of the position code in which the value of the marks is defined by their location in relation to a raster, for example, the area of the marks can correspond to a mark probability, which indicates the probability that a current mark is really a mark in the position code. The value probabilities for each mark can then be multiplied by its mark probability before the raster point probabilities are calculated. An alternative to this method is that a form of area filter is used in the device to remove the noise marks completely at an early stage. This filter acts in such a way that all marks that have an area that lies between two limit values are identified as marks in the position code, while all marks outside the limit values are rejected.

In the case of the position code in which the value of the marks is defined by their shape/size, for example, the location of the marks in relation to a raster can instead indicate the probability that a mark is a mark in the position code.

It would of course also be possible to use the invention in connection with position determination in a single dimension. In the case of the position code discussed by way of introduction, this would mean that one of said first and second sets would be used to determine in the manner described above a first or a second coordinate for the position.

The invention is not limited to use in connection with position codes that are based on binary number bases. Of course also other number bases can be used to express the cyclic main number sequences, as well as the element values in the first and the second decoding values.

Moreover, the invention is not limited to use in connection with position codes where the elements assume two or four element values. In one alternative, the elements may instead assume eight element values. Each element value may then be converted into a first, a second and a third decoding value for each of three dimensions. Consequently also a third set and a third matrix may be created for a third dimension. This could be used, for instance, to determine a position in three dimensions.

The device and the method according to the present invention are not limited to use in connection with coding of positions, but can also be used in other situations, for example when decoding data stored in the form of a code on a base, as described in Patent Application WO 01/71653.

## Claims

1. A method for decoding data stored in a partial area of a coding pattern (17) on a surface (16), said coding pattern containing elements (18) which each have at least two possible decoding values, comprising

   identifying (8) in a recorded image of the partial area a plurality of said elements,
   **characterized by**
   calculating (D, E), for each one of said at least two possible decoding values for each identified element, an associated decoding value probability which indicates the probability that the element has the decoding value, and

   performing (F-L) the decoding of data based on the decoding values and the corresponding decoding value probabilities.

2. A method as claimed in claim 1, wherein the decoding of data comprises determining (L) a coordinate for a point on the surface.

3. A process as claimed in claim 1, wherein the decoding of data comprises determining (L) two coordinates for a point on the surface.

4. A method as claimed in any one of claims 1-3, wherein the decoding of data comprises decoding at least a first set of decoding values for a predetermined number of the identified elements.

5. A method as claimed in claim 4, comprising calculating, by means of the decoding value probabilities for the first set of decoding values, a sequence probability for each of a plurality of permissible combinations of decoding values, each sequence probability indicating the probability of a sequence of elements in the recorded partial area of the image having said combination of decoding values.

6. A method as claimed in claim 4, further comprising selecting, for each of the elements corresponding to the first set of decoding values, the decoding value which has the highest associated decoding value probability, and carrying out the decoding of data based on the selected decoding values.

7. A method as claimed in claim 4, further comprising selecting, for each of the elements corresponding to the first set of decoding values, one of the possible decoding values based on a condition, given by the coding pattern, for the relation between the decoding values of the elements.

8. A method as claimed in claim 7, wherein said condition indicates permissible combinations of the decoding values for the elements corresponding to the first set.

9. A method as claimed in claim 5 or 8, wherein the permissible combinations are determined by a cyclic main number sequence (39), which contains only mutually unique partial sequences of a predetermined length, each partial sequence corresponding to one of the permissible combinations.

10. A method as claimed in claim 9, wherein the partial sequences and the cyclic main number sequence (39) are such that no partial sequence is present in the cyclic main number sequence in inverted and reversed form.

11. A method as claimed in claim 8, comprising carrying out the decoding of data based on sequence probabilities, a sequence probability for a sequence of elements being defined based on the decoding value probabilities for the decoding values for the sequence that correspond to one of the permissible combinations.

12. A method as claimed in claim 11, comprising carrying out the decoding of data based on the decoding values for the sequence that give the highest sequence probability.

13. A method as claimed in any one of claims 4-12, wherein each element has at least two possible decoding values for each of two separately decodable dimensions of data, the decoding values of the first set consisting of the possible decoding values for the first dimension of data.

14. A method as claimed in claim 13, wherein each element has at least four possible element values, which correspond to different combinations of a possible decoding value of the first dimension and a possible decoding value of the second dimension, further comprising calculating, for each identified element, an associated decoding value probability for each possible element value that the element has this element value.

15. A method as claimed in claim 14, further comprising dividing each of the possible element values for the elements corresponding to the first set into a first possible decoding value for the first dimension and a second possible decoding value for the second dimension and associating with each of these decoding values the decoding value probability of the element value.

16. A method as claimed in claim 15, wherein the division of the possible element values takes place by the element value being expressed as two numbers in a number base which is smaller than the number base in which the element value is expressed.

17. A method as claimed in claim 15 or 16, further comprising assigning, if the division of two of the possible element values for an element results in two identical possible decoding values for one dimension of data, the possible decoding value the highest of the decoding value probabilities assigned to these element values.

18. A method as claimed in any one of claims 4-17, wherein the decoding of data further comprises decoding a second set of decoding values for a predetermined number of the identified elements.

19. A method as claimed in claim 18, wherein the decoding values in the second set consist of the possible decoding values for the second dimension of data, further comprising the step of assigning each decoding value in the second set a value probability which indicates the probability of the corresponding element having this decoding value.

20. A method as claimed in claim 18 or 19, wherein the decoding values and their associated decoding value probabilities are determined in the same manner as the decoding values for the first set, and the decoding of the second set of decoding values is carried out in the same way as the decoding of the first set of decoding values.

21. A method as claimed in claim 5 or 11, comprising carrying out the decoding of data based on rotation probabilities, which correspond to different rotations of the recorded image and which are defined based on the sequence probabilities.

22. A method as claimed in any one of claims 1-3, comprising carrying out the decoding of data based on rotation probabilities, which correspond to different rotations of the recorded image and which are defined based on the decoding value probabilities associated to the decoding values of the identified elements.

23. A method as claimed in claim 21 or 22, comprising carrying out the decoding of data based on the rotation of the recorded image which corresponds to the highest rotation probability.

24. A method as claimed in any one of claims 1-12, wherein each element has at least two possible element values, which are identical with the possible decoding values of the element, and wherein each element value has an associated decoding value probability which is identical with the decoding value probability of the decoding value.

25. A method as claimed in claim 14 or 24, wherein each of the identified elements comprises at least one mark and the decoding value probabilities of the element values are calculated based on the size of the marks in relation to a number of ideal sizes $R_i$ of the marks.

26. A method as claimed in claim 25, wherein the decoding value probabilities of the element values, for each of the ideal sizes $R_i$, is a function of $\exp(-(R_i-r)^2/v)$ where r is the size of the mark and v is a constant.

27. A method as claimed in claim 14 or 24, wherein each of the identified elements comprises at least one mark (25), which is associatable with one reference point of a number of reference points in a reference system, and wherein the decoding value probabilities of the element values are calculated based on the location of the marks in relation to the reference points with which they are associated.

28. A method as claimed in claim 27, wherein the decoding value probabilities are defined by the distance (26) of the marks to each of a number of ideal locations belonging to the reference points with which they are associated.

29. A method as claimed in claim 28, wherein the decoding value probabilities for each mark, for each of the distances $d_i$, are a function of $\exp(-(d_i)^2/v)$ where v is a constant.

30. A method as claimed in any one of claims 27-29, wherein the reference system is a raster and the reference points are raster points (22), which each consists of an intersection in the raster.

31. A method as claimed in claims 14 or 24 in combination with claim 4, wherein the elements corresponding to the first set are selected based on a maximizing of an information measure for the first set, said information measure being defined based on the decoding value probabilities for the element values of the elements corresponding to the first set.

32. A device for data decoding, comprising
processing means for decoding of data which is stored in a partial area of a coding pattern (17) on a surface (16), which coding pattern contains elements (18), which each have at least two possible decoding values, **characterized in that** it is arranged to
identify (B) in a recorded image of the partial area a plurality of said elements,
calculate (D-E), for each one of said at least two possible decoding values for each identified element, an associated decoding value probability which indicates the probability that the element has the decoding value, and
carry out (F-L) the decoding of data based on the decoding values and the corresponding decoding value probabilities.

33. A device for data decoding as claimed in claim 32, said device being adapted to decode at least a first set of decoding values for a predetermined number of the identified elements.

34. A device for data decoding as claimed in claim 33, said device being adapted to calculate (J), by means of the decoding value probabilities for the first set of decoding values, a sequence probability for each of a plurality of permissible combinations of decoding values, each sequence probability indicating the probability that a sequence of elements in the partial area of the recorded image has said combination of decoding values.

35. A device for data decoding as claimed in claim 33 or 34, said device being adapted to select, for each of the elements corresponding to the first set of decoding values, one of the possible decoding values based on a condition, given by the coding pattern, for the relation of the decoding values of the elements.

36. A device for data decoding as claimed in claim 32, adapted to carry out the decoding of data based on rotation probabilities, which correspond to different rotations of the recorded image and which are defined based on the decoding value probabilities associated to the decoding values of the identified elements.

37. A memory medium on which is stored a computer program with instructions for data decoding based on an image as claimed in any one of claims 1-31.

**Patentansprüche**

1. Verfahren zum Decodieren von Daten, die in einem partiellen Bereich eines Codierungsmusters (17) auf einer Oberfläche (16) gespeichert sind, wobei das Codierungsmuster Elemente (18) enthält, die jeweils mindestens zwei mögliche Decodierungswerte aufweisen, mit den folgenden Schritten:

   Identifizieren (B) mehrerer der Elemente in einem aufgezeichneten Bild des partiellen Bereichs, **gekennzeichnet durch**
   Berechnen (D, E) einer assoziierten Decodierungswertwahrscheinlichkeit für jeden der mindestens zwei möglichen Decodierungswerte für jedes identifizierte Element, die die Wahrscheinlichkeit angibt, dass das Element den Decodierungswert aufweist, und
   Durchführen (F-L) des Decodierens von Daten auf der Basis der Decodierungswerte und der entsprechenden Decodierungswertwahrscheinlichkeiten.

2. Verfahren nach Anspruch 1, wobei das Decodieren von Daten das Bestimmen (L) einer Koordinate für einen Punkt auf der Oberfläche umfasst.

3. Prozess nach Anspruch 1, wobei das Decodieren von Daten das Bestimmen (L) von zwei Koordinaten für einen Punkt auf der Oberfläche umfasst.

4. Verfahren nach einem der Ansprüche 1-3, wobei das Decodieren von Daten das Decodieren mindestens einer ersten Menge von Decodierungswerten für eine vorbestimmte Anzahl der identifizierten Elemente umfasst.

5. Verfahren nach Anspruch 4, umfassend das Berechnen einer Sequenzwahrscheinlichkeit für jede von mehreren zulässigen Kombinationen von Decodierungswerten mittels der Decodierungswertwahrscheinlichkeiten für die erste Menge von Decodierungswerten, wobei jede Sequenzwahrscheinlichkeit die Wahrscheinlichkeit angibt, dass eine Sequenz von Elementen in dem aufgezeichneten partiellen Bereich des Bildes die Kombination von Decodierungswerten aufweist.

6. Verfahren nach Anspruch 4, ferner umfassend das Auswählen des Decodierungswerts, der die höchste assoziierte Decodierungswertwahrscheinlichkeit aufweist, für jedes der der ersten Menge von Decodierungswerten entsprechenden Elemente, und das Ausführen der Decodierung von Daten auf der Basis der gewählten Decodierungswerte.

7. Verfahren nach Anspruch 4, ferner umfassend das Auswählen eines der möglichen Decodierungswerte auf der Basis einer durch das Codierungsmuster gegebenen Bedingung für die Beziehung zwischen den Decodierungswerten der Elemente für jedes der der ersten Menge von Decodierungswerten entsprechenden Elemente.

8. Verfahren nach Anspruch 7, wobei die Bedingung zulässige Kombinationen der Decodierungswerte für die der ersten Menge entsprechenden Elemente angibt.

9. Verfahren nach Anspruch 5 oder 8, wobei die zulässigen Kombinationen durch eine cyclische Hauptnummernsequenz (39) bestimmt werden, die nur untereinander einzigartige partielle Sequenzen einer vorbestimmten Menge enthält, wobei jede partielle Sequenz einer der zulässigen Kombinationen entspricht.

10. Verfahren nach Anspruch 9, wobei die partiellen Sequenzen und die cyclische Hauptnummernsequenz (39) dergestalt sind, dass keine partielle Sequenz in der cyclischen Hauptnummernsequenz in invertierter und umgekehrter Form vorliegt.

11. Verfahren nach Anspruch 8, umfassend das Ausführen der Decodierung von Daten auf der Basis von Sequenzwahrscheinlichkeiten, wobei eine Sequenzwahrscheinlichkeit für eine Sequenz von Elementen auf der Basis der Decodierungswertwahrscheinlichkeiten für die Decodierungswerte für die Sequenz definiert wird, die einer der zulässigen Kombinationen entsprechen.

12. Verfahren nach Anspruch 11, umfassend das Ausführen der Decodierung von Daten auf der Basis der Decodierungswerte für die Sequenz, die die höchste Sequenzwahrscheinlichkeit ergeben.

13. Verfahren nach einem der Ansprüche 4-12, wobei jedes Element mindestens zwei mögliche Decodierungswerte für jede von zwei separat decodierbaren Dimensionen von Daten aufweist, wobei die Decodierungswerte der ersten Menge aus den möglichen Decodierungswerten für die erste Dimension von Daten bestehen.

14. Verfahren nach Anspruch 13, wobei jedes Element mindestens vier mögliche Elementwerte aufweist, die verschiedenen Kombinationen eines möglichen Decodierungswerts der ersten Dimension und einem möglichen Decodierungswert der zweiten Dimension entsprechen, ferner umfassend das Berechnen einer assoziierten Decodierungswertwahrscheinlichkeit für jeden möglichen Elementwert, dass das Element diesen Elementwert aufweist, für jedes identifizierte Element.

15. Verfahren nach Anspruch 14, ferner umfassend das Aufteilen jedes der möglichen Elementwerte für die der ersten Menge entsprechenden Elemente in einen ersten möglichen Decodierungswert für die erste Dimension und einen zweiten möglichen Decodierungswert für die zweite Dimension und das Assoziieren der Decodierungswertwahrscheinlichkeit des Elementwerts mit jedem dieser Decodierungswerte.

16. Verfahren nach Anspruch 15, wobei das Aufteilen der möglichen Elementwerte stattfindet, indem der Elementwert als zwei Zahlen in einer Zahlenbasis ausgedrückt wird, die kleiner als die Zahlenbasis ist, in der der Elementwert ausgedrückt wird.

17. Verfahren nach Anspruch 15 oder 16, bei dem ferner, wenn die Aufteilung von zwei der möglichen Elementwerte für ein Element zu zwei identischen möglichen Decodierungswerten für eine Dimension von Daten führt, dem möglichen Decodierungswert die höchste der diesen Elementwerten zugewiesenen Decodierungswertwahrscheinlichkeiten zugewiesen wird.

18. Verfahren nach einem der Ansprüche 4-17, wobei das Decodieren von Daten ferner das Decodieren einer zweiten Menge von Decodierungswerten für eine vorbestimmte Anzahl der identifizierten Elemente umfasst.

19. Verfahren nach Anspruch 18, wobei die Decodierungswerte in der zweiten Menge aus den möglichen Decodierungswerten für die zweite Dimension von Daten bestehen, bei dem ferner jedem Decodierungswert in der zweiten Menge eine Wertwahrscheinlichkeit zugewiesen wird, die die Wahrscheinlichkeit angibt, dass das entsprechende Element diesen Decodierungswert aufweist.

20. Verfahren nach Anspruch 18 oder 19, wobei die Decodierungswerte und ihre assoziierten Decodierungswertwahrscheinlichkeiten auf dieselbe Weise wie die Decodierungswerte für die erste Menge bestimmt werden und das Decodieren der zweiten Menge von Decodierungswerten auf dieselbe Weise wie das Decodieren der ersten Menge von Decodierungswerten ausgeführt wird.

21. Verfahren nach Anspruch 5 oder 11, umfassend das Ausführen der Decodierung von Daten auf der Basis von Drehungswahrscheinlichkeiten, die verschiedenen Drehungen des aufgezeichneten Bildes entsprechen und die auf der Basis der Sequenzwahrscheinlichkeiten definiert werden.

22. Verfahren nach einem der Ansprüche 1-3, umfassend das Ausführen der Decodierung von Daten auf der Basis von Drehungswahrscheinlichkeiten, die verschiedenen Drehungen des aufgezeichneten Bildes entsprechen und die auf der Basis der Decodierungswertwahrscheinlichkeiten definiert werden, die mit den Decodierungswerten der identifizierten Elemente assoziiert sind.

23. Verfahren nach Anspruch 21 oder 22, umfassend das Ausführen der Decodierung von Daten auf der Basis der Drehung des aufgezeichneten Bildes, die der höchsten Drehungswahrscheinlichkeit entspricht.

24. Verfahren nach einem der Ansprüche 1-12, wobei jedes Element mindestens zwei mögliche Elementwerte aufweist, die mit den möglichen Decodierungswerten des Elements identisch sind, und wobei jeder Elementwert eine assoziierte Decodierungswertwahrscheinlichkeit aufweist, die mit der Decodierungswertwahrscheinlichkeit des Decodierungswerts identisch ist.

25. Verfahren nach Anspruch 14 oder 24, wobei jedes der identifizierten Elemente mindestens eine Markierung umfasst und die Decodierungswertwahrscheinlichkeiten der Elementwerte auf der Basis der Größe der Markierungen in Bezug auf eine Anzahl idealer Größen $R_i$ der Markierungen berechnet werden.

26. Verfahren nach Anspruch 25, wobei die Decodierungswertwahrscheinlichkeiten der Elementwerte für jede der idealen Größen $R_i$ eine Funktion von $\exp(-(R_i-r)^2/v)$ sind, wobei r die Größe der Markierung und v eine Konstante ist.

27. Verfahren nach Anspruch 14 oder 24, wobei jedes der identifizierten Elemente mindestens eine Markierung (25) umfasst, die mit einem Bezugspunkt einer Anzahl von Bezugspunkten in einem Bezugssystem assoziierbar ist, und wobei die Decodierungswertwahrscheinlichkeiten der Elementwerte auf der Basis des Orts der Markierungen in Bezug auf die Bezugspunkte, mit denen sie assoziiert sind, berechnet werden.

28. Verfahren nach Anspruch 27, wobei die Decodierungswertwahrscheinlichkeiten durch die Distanz (26) der Markierungen zu jedem einer Anzahl idealer Orte definiert werden, die zu den Bezugspunkten gehören, mit denen sie assoziiert sind.

29. Verfahren nach Anspruch 28, wobei die Decodierungswertwahrscheinlichkeiten für jede Markierung für jede der Distanzen $d_i$ eine Funktion von $\exp(-(d_i)^2/v)$ sind, wobei v eine Konstante ist.

30. Verfahren nach einem der Ansprüche 27-29, wobei das Bezugssystem ein Raster ist und die Bezugspunkte Rasterpunkte (22) sind, die jeweils aus einem Schnittpunkt in dem Raster bestehen.

31. Verfahren nach Anspruch 14 oder 24, in Kombination mit Anspruch 4, wobei die der ersten Menge entsprechenden Elemente auf der Basis einer Maximierung eines Informationsmaßes für die erste Menge ausgewählt werden, wobei das Informationsmaß auf der Basis der Decodierungswertwahrscheinlichkeiten für die Elementwerte der der ersten Menge entsprechenden Elemente definiert wird.

32. Einrichtung zur Datendecodierung, umfassend:

   Verarbeitungsmittel zum Decodieren von Daten, die in einem partiellen Bereich eines Codierungsmusters (17) auf einer Oberfläche (16) gespeichert sind, wobei das Codierungsmuster Elemente (18) enthält, die jeweils zwei mögliche Decodierungswerte aufweisen, **dadurch gekennzeichnet, dass** sie für Folgendes ausgelegt ist:

   Identifizieren (B) mehrerer der Elemente in einem aufgezeichneten Bild des partiellen Bereichs,
   Berechnen (D-E) einer assoziierten Decodierungswertwahrscheinlichkeit für jeden der mindestens zwei möglichen Decodierungswerte für jedes identifizierte Element, die die Wahrscheinlichkeit angibt, dass das Element den Decodierungswert aufweist, und
   Ausführen (F-L) der Decodierung von Daten auf der Basis der Decodierungswerte und der entsprechenden Decodierungswertwahrscheinlichkeiten.

33. Einrichtung zur Datendecodierung nach Anspruch 32, wobei die Einrichtung dafür ausgelegt ist, mindestens eine erste Menge von Decodierungswerten für eine vorbestimmte Anzahl der identifizierten Elemente zu decodieren.

34. Einrichtung zur Datendecodierung nach Anspruch 33, wobei die Einrichtung dafür ausgelegt ist, mittels der Decodierungswertwahrscheinlichkeiten für die erste Menge von Decodierungswerten eine Sequenzwahrscheinlichkeit für jede von mehreren zulässigen Kombinationen von Decodierungswerten zu berechnen (J), wobei jede Sequenzwahrscheinlichkeit die Wahrscheinlichkeit angibt, dass eine Sequenz von Elementen in dem partiellen Bereich des aufgezeichneten Bildes die Kombination von Decodierungswerten aufweist.

35. Einrichtung zur Datendecodierung nach Anspruch 33 oder 34, wobei die Einrichtung dafür ausgelegt ist, für jedes der der ersten Menge von Decodierungswerten entsprechenden Elemente auf der Basis einer durch das Codierungsmuster gegebenen Bedingung für die Beziehung der Decodierungswerte der Elemente einen der möglichen Decodierungswerte auszuwählen.

36. Einrichtung zur Datendecodierung nach Anspruch 32, die dafür ausgelegt ist, die Decodierung von Daten auf der Basis von Drehungswahrscheinlichkeiten auszuführen, die verschiedenen Drehungen des aufgezeichneten Bildes entsprechen und die auf der Basis der Decodierungswertwahrscheinlichkeiten definiert werden, die mit den Decodierungswerten der identifizierten Elemente assoziiert sind.

37. Speichermedium, auf dem ein Computerprogramm mit Anweisungen zur Datendecodierung auf der Basis eines Bildes nach einem der Ansprüche 1-31 gespeichert ist.

**Revendications**

1. Procédé de décodage de données mémorisées dans une zone partielle d'une configuration de codage (17) sur une surface (16), ladite configuration de codage contenant des éléments (18) qui ont chacun au moins deux valeurs de décodage possibles, comprenant
l'identification (B) dans une image enregistrée de la zone partielle d'une pluralité desdits éléments,
**caractérisé par**
le calcul (D, E), pour chacune desdites au moins deux valeurs de décodage possibles de chaque élément identifié, d'une probabilité de valeur de décodage associée qui indique la probabilité que l'élément possède cette valeur de décodage, et
l'exécution (F-L) du décodage des données en fonction des valeurs de décodage et des probabilités de valeurs de décodage correspondantes.

2. Procédé selon la revendication 1, dans lequel le décodage de données comprend la détermination (L) d'une coordonnée d'un point sur la surface.

3. Procédé selon la revendication 1, dans lequel le décodage de données comprend la détermination (L) de deux coordonnées d'un point sur la surface.

4. Procédé selon l'une quelconque des revendications 1 à 3, dans lequel le décodage de données comprend le décodage d'au moins un premier ensemble de valeurs de décodage d'un nombre prédéterminé des éléments identifiés.

5. Procédé selon la revendication 4, comprenant le calcul, au moyen des probabilités de valeurs de décodage du premier ensemble de valeurs de décodage, d'une probabilité de séquence pour chacune d'une pluralité de combinaisons admissibles de valeurs de décodage, chaque probabilité de séquence indiquant la probabilité d'une séquence d'éléments dans la zone partielle enregistrée de l'image ayant ladite combinaison de valeurs de décodage.

6. Procédé selon la revendication 4, comprenant en outre la sélection, pour chacun des éléments correspondant au premier ensemble de valeurs de décodage, de la valeur de décodage qui a la plus haute probabilité de valeur de décodage associée, et l'exécution du décodage des données en fonction des valeurs de décodage sélectionnées.

7. Procédé selon la revendication 4, comprenant en outre la sélection, pour chacun des éléments correspondant au premier ensemble de valeurs de décodage, de l'une des valeurs de décodage possibles en fonction d'une condition, donnée par la configuration de codage, de la relation entre les valeurs de décodage des éléments.

8. Procédé selon la revendication 7, dans lequel ladite condition indique des combinaisons admissibles des valeurs de décodage des éléments correspondant au premier ensemble.

9. Procédé selon la revendication 5 ou 8, dans lequel les combinaisons admissibles sont déterminées par une séquence cyclique de nombres principaux (39), laquelle ne contient que des séquences partielles mutuellement uniques d'une longueur prédéterminée, chaque séquence partielle correspondant à l'une des combinaisons admissibles.

10. Procédé selon la revendication 9, dans lequel les séquences partielles et la séquence cyclique de nombres principaux (39) sont telles qu'aucune séquence partielle n'est présente dans la séquence cyclique de nombres principaux en forme inverse et renversée.

11. Procédé selon la revendication 8, comprenant l'exécution du décodage de données en fonction de probabilités de séquences, une probabilité de séquence d'une séquence d'éléments étant définie en fonction des probabilités de valeurs de décodage pour les valeurs de décodage de la séquence qui correspondent à l'une des combinaisons admissibles.

12. Procédé selon la revendication 11, comprenant l'exécution du décodage de données en fonction des valeurs de décodage de la séquence qui donnent la plus haute probabilité de séquence.

13. Procédé selon l'une quelconque des revendications 4 à 12, dans lequel chaque élément a au moins deux valeurs de décodage possibles pour chacune de deux dimensions de données décodables séparément, les valeurs de décodage du premier ensemble consistant en les valeurs de décodage possibles pour la première dimension de données.

**14.** Procédé selon la revendication 13, dans lequel chaque élément a au moins quatre valeurs d'élément possibles, lesquelles correspondent à des combinaisons différentes d'une valeur de décodage possible de la première dimension et d'une valeur de décodage possible de la seconde dimension, comprenant en outre le calcul, pour chaque élément identifié, d'une probabilité de valeur de décodage associée pour chaque valeur d'élément possible que l'élément possède cette valeur d'élément.

**15.** Procédé selon la revendication 14, comprenant en outre la division de chacune des valeurs d'élément possibles des éléments correspond au premier ensemble en une première valeur de décodage possible pour la première dimension et une seconde valeur de décodage possible pour la seconde dimension et l'association à chacune de ces valeurs de décodage de la probabilité de valeur de décodage de la valeur d'élément.

**16.** Procédé selon la revendication 15, dans lequel la division des valeurs d'élément possibles se traduit par l'expression de la valeur d'élément sous forme de deux nombres dans une base de numération qui est plus petite que la base de numération dans laquelle la valeur d'élément est exprimée.

**17.** Procédé selon la revendication 15 ou 16, comprenant en outre l'assignation, si la division de deux des valeurs d'élément possibles d'un élément entraîne deux valeurs de décodage possibles identiques pour une même dimension de données, à la valeur de décodage possible de la plus haute des probabilités de valeurs de décodage assignées à ces valeurs d'élément.

**18.** Procédé selon l'une quelconque des revendications 4 à 17, dans lequel le décodage de données comprend en outre le décodage d'un second ensemble de valeurs de décodage pour un nombre prédéterminé des éléments identifiés.

**19.** Procédé selon la revendication 18, dans lequel les valeurs de décodage dans le second ensemble consistent en les valeurs de décodage possibles pour la seconde dimension de données, comprenant en outre l'étape d'assignation à chaque valeur de décodage dans le second ensemble d'une probabilité de valeur qui indique la probabilité que l'élément correspondant possède cette valeur de décodage.

**20.** Procédé selon la revendication 18 ou 19, dans lequel les valeurs de décodage et leurs probabilités de valeurs de décodage associées sont déterminées de la même manière que les valeurs de décodage du premier ensemble, et le décodage du second ensemble de valeurs de décodage est exécuté de la même façon que le décodage du premier ensemble de valeurs de décodage.

**21.** Procédé selon la revendication 5 ou 11, comprenant l'exécution du décodage de données en fonction de probabilités de rotation, lesquelles correspondent à différentes rotations de l'image enregistrée et lesquelles sont définies en fonction des probabilités de séquence.

**22.** Procédé selon l'une quelconque des revendications 1 à 3, comprenant l'exécution du décodage de données en fonction de probabilités de rotation, lesquelles correspondent à différentes rotations de l'image enregistrée et lesquelles sont définies en fonction des probabilités de valeurs de décodage associées aux valeurs de décodage des éléments identifiés.

**23.** Procédé selon la revendication 21 ou 22, comprenant l'exécution du décodage de données en fonction de la rotation de l'image enregistrée qui correspond à la plus haute probabilité de rotation.

**24.** Procédé selon l'une quelconque des revendications 1 à 12, dans lequel chaque élément a au moins deux valeurs d'élément possibles, lesquelles sont identiques aux valeurs de décodage possibles de l'élément, et dans lequel chaque valeur d'élément a une probabilité de valeur de décodage associée qui est identique à la probabilité de valeur de décodage de la valeur de décodage.

**25.** Procédé selon la revendication 14 ou 24, dans lequel chacun des éléments identifiés comprend au moins une marque et les probabilités de valeurs de décodage des valeurs d'éléments sont calculées en fonction de la taille des marques relativement à un nombre de tailles idéales $R_i$ des marques.

**26.** Procédé selon la revendication 25, dans lequel les probabilités de valeurs de décodage des valeurs d'éléments, pour chacune des tailles idéales $R_i$, est fonction de $\exp(-(R_i-r)^2/v)$ où r est la taille de la marque et v est une constante.

**27.** Procédé selon la revendication 14 ou 24, dans lequel chacun des éléments identifiés comprend au moins une marque (25), laquelle peut être associée à un point de référence d'un nombre de points de référence dans un système de référence, et dans lequel les probabilités de valeurs de décodage des valeurs d'éléments sont calculées en fonction de la position des marques relativement aux points de référence auxquels elles sont associées.

**28.** Procédé selon la revendication 27, dans lequel les probabilités de valeurs de décodage sont définies par la distance (26) des marques jusqu'à chacune d'un nombre de positions idéales appartenant aux points de référence auxquels elles sont associées.

**29.** Procédé selon la revendication 28, dans lequel les probabilités de valeurs de décodage de chaque marque, pour chacune des distances $d_i$, sont fonction de $\exp(-(d_i)^2/v)$ où v est une constante.

**30.** Procédé selon l'une quelconque des revendications 27 à 29, dans lequel le système de référence est une trame et les points de référence sont des points de trame (22), lesquels consistent chacun en une intersection de la trame.

**31.** Procédé selon la revendication 14 ou 24 en combinaison à la revendication 4, dans lequel les éléments correspondants au premier ensemble sont sélectionnés en fonction d'une maximisation d'une mesure d'information du premier ensemble, ladite mesure d'information étant définie en fonction des probabilités de valeurs de décodage des valeurs d'éléments des éléments correspondants au premier ensemble.

**32.** Dispositif de décodage de données, comprenant
un moyen de traitement pour le décodage de données qui sont mémorisées dans une zone partielle d'une configuration de codage (17) sur une surface (16), ladite configuration de codage contenant des éléments (18), lesquels ont chacun au moins deux valeurs de décodage possibles, **caractérisé en ce qu'**il est agencé pour
identifier (B) dans une image enregistrée de la zone partielle une pluralité desdits éléments,
calculer (D, E), pour chacune desdites au moins deux valeurs de décodage possibles de chaque élément identifié, une probabilité de valeur de décodage associée qui indique la probabilité que l'élément possède cette la valeur de décodage, et
exécuter (F-L) le décodage des données en fonction des valeurs de décodage et des probabilités de valeurs de décodage correspondantes.

**33.** Dispositif de décodage de données selon la revendication 32, ledit dispositif étant adapté pour décoder au moins un premier ensemble de valeurs de décodage d'un nombre prédéterminé des éléments identifiés.

**34.** Dispositif de décodage de données selon la revendication 33, ledit dispositif étant adapté pour calculer (J), au moyen des probabilités de valeurs de décodage du premier ensemble de valeurs de décodage, une probabilité de séquence pour chacune d'une pluralité de combinaisons admissibles de valeurs de décodage, chaque probabilité de séquence indiquant la probabilité qu'une séquence d'éléments dans la zone partielle de l'image enregistrée possède ladite combinaison de valeurs de décodage.

**35.** Dispositif de décodage de données selon la revendication 33 ou 34, ledit dispositif étant adapté pour sélectionner, pour chacun des éléments correspondant au premier ensemble de valeurs de décodage, l'une des valeurs de décodage possibles en fonction d'une condition, donnée par la configuration de codage, de la relation des valeurs de décodage des éléments.

**36.** Dispositif de décodage de données selon la revendication 32, adapté pour exécuter le décodage des données en fonction de probabilités de rotation, lesquelles correspondent à différentes rotations de l'image enregistrée et lesquelles sont définies en fonction des probabilités de valeurs de décodage associées aux valeurs de décodage des éléments identifiés.

**37.** Support de mémorisation sur lequel est mémorisé un programme informatique ayant des instructions de décodage de données en fonction d'une image selon l'une quelconque des revendications 1 à 31.

Fig. 1

*Fig. 2*

Fig. 3a

Fig. 3b

*Fig. 4*

*Fig. 5*

*28*

*29*

*22*

**Fig. 6a**

*30*

| Value | $P_1$ |
|-------|-------|
| "0"   | 0,26  |
| "1"   | 0,45  |
| "2"   | 0,16  |
| "3"   | 0,13  |

*31*

| Value | $P_1$ |
|-------|-------|
| "0"   | 0,11  |
| "1"   | 0,13  |
| "2"   | 0,57  |
| "3"   | 0,19  |

**Fig. 6b**

*32*

| Element value | $P_2$ |
|---------------|-------|
| "0"           | 0,26  |
| "1"           | 0,45  |
| "2"           | 0,57  |
| "3"           | 0,19  |

**Fig. 6c**

*33*

| Element value | $P_2$ | Bit comb. |
|---|---|---|
| "0" | 0,26 | 0,1 |
| "1" | 0,45 | 0,0 |
| "2" | 0,57 | 1,0 |
| "3" | 0,19 | 1,1 |

*33'*

| | | |
|---|---|---|
| "0" | 0,26 | 0 |
| "1" | 0,45 | 0 |
| "2" | 0,57 | 1 |
| "3" | 0,19 | 1 |

*33''*

| | | |
|---|---|---|
| "0" | 0,26 | 1 |
| "1" | 0,45 | 0 |
| "2" | 0,57 | 0 |
| "3" | 0,19 | 1 |

**Fig. 7a**

max(0.26, 0.45) = 0.45
max(0.57, 0.19) = 0.57

max(0.45, 0.57) = 0.57
max(0.26, 0.19) = 0.26

(0.45, 0.57)

(0.57, 0.26)

*34*

*35*

**Fig. 7b**

(0.57, 0.45)

(0.26, 0.57)

*34'*

*35'*

**Fig. 7c**

[00000010011111010.....]

39

*Fig. 8*

| 36 | 37 | |
|---|---|---|
| 0 | 0.11, 0.37 | 0.11 |
| 1 | 0.08, 0.53 | 0.53 |
| 0 | 0.84, 0.57 | 0.84 |
| 0 | 0.21, 0.25 | 0.21 |
| 1 | 0.62, 0.91 | 0.91 |
| 1 | 0.38, 0.06 | 0.06 |
| 0 | 0.64, 0.42 | 0.64 |
| 1 | 0.04, 0.17 | 0.17 |

$= 6{,}11 \cdot 10^{-5}$

38

*Fig. 9*

*Fig. 10*

45

$$\begin{bmatrix} (0.45,\ 0.27) & (0.31,\ 0.41) & (0.73,\ 0.09) \\ (0.36,\ 0.14) & (0.73,\ 0.09) & (0.16,\ 0.47) \\ (0.72,\ 0.09) & (0.55,\ 0.12) & (0.12,\ 0.55) \end{bmatrix}$$

46

$$\begin{bmatrix} (0.45,\ 0.15) & (0.15,\ 0.41) & (0.11,\ 0.73) \\ (0.36,\ 0.36) & (0.73,\ 0.11) & (0.47,\ 0.24) \\ (0.12,\ 0.72) & (0.55,\ 0.22) & (0.22,\ 0.55) \end{bmatrix}$$

47

45′

$$\begin{bmatrix} (0.55,\ 0.12) & (0.12,\ 0.55) & (0.09,\ 0.72) \\ (0.47,\ 0.16) & (0.09,\ 0.73) & (0.14,\ 0.36) \\ (0.09,\ 0.73) & (0.41,\ 0.31) & (0.27,\ 0.45) \end{bmatrix}$$

48

$$\begin{bmatrix} (0.55,\ 0.22) & (0.22,\ 0.55) & (0.72,\ 0.12) \\ (0.24,\ 0.47) & (0.11,\ 0.73) & (0.36,\ 0.36) \\ (0.73,\ 0.11) & (0.41,\ 0.15) & (0.15,\ 0.45) \end{bmatrix}$$

49

Fig. 11

Fig. 12

Fig. 13a

Fig. 13b

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0126032 A
- WO 0073983 A
- US 5221833 A
- WO 0175783 A
- WO 0126034 A
- SE 01040880
- US 2005199729 A
- US 2003122855 A
- WO 03049023 A
- EP 1456811 A

- WO 0126033 A
- SE 01035898
- US 2007064818 A
- US 2003128194 A
- WO 03038741 A
- EP 1451767 A
- WO 0079383 A
- US 5245165 A
- WO 0171653 A